# EUROPEAN PATENT APPLICATION

(11) **EP 4 458 135 A1**
(43) Date of publication of application: **06.11.2024**
(21) Application number: 23171904.8
(22) Date of filing: 05.05.2023
(51) Int. Cl.: A01G 23/00

(54) **METHOD TO IDENTIFY A LOG USING A FORESTRY VEHICLE, AND A FORESTRY VEHICLE SYSTEM**

(71) Applicant: Komatsu Forest AB, 907 04 Umeå (SE)
(72) Inventor: ASSARSSON, Peter, 907 04 Umeå (SE); TJERNBERG, Fredrik, 907 04 Umeå (SE)
(74) Representative: AWA Sweden AB

(57) **Abstract**

Method (100) to match a log using a forestry vehicle comprising a body, a crane mounted on the body, and a control unit, wherein the crane comprises a first boom. The method comprises receiving (110) a log data set indicating a position of at least one log, selecting (120) a log from the at least one log, and generating (130) vehicle positional data indicating the position of the forestry vehicle. The method further comprises measuring (140) a slew angle, α₁, of the crane relative the body in a third plane extending in the longitudinal direction and the width direction of the forestry vehicle, measuring (150) a first boom angle, α₂, of the first boom relative the body, and identifying (160) the selected log by the control unit based on the log data set, the vehicle positional data, the slew angle, and the first boom angle.

## Description

### Field of the invention

The present invention relates to a method to match logs using a forestry vehicle, and a forestry vehicle system for matching logs.

### Technical background

Different types of vehicles are frequently used within different areas to conduct work and moving equipment, products, objects etc. One example is within the forest industry where powerful vehicles are used for harvesting and transporting/moving felled trees from the forest.

When engaging with and transporting felled trees to e.g., a saw or pulp mill, it is often desirable to match the felled tree with a tree group, species, and/or assortment. Within the forest industry, the approach of identifying and matching harvested trees often relies on skilled operators both operating a harvester to cut down the trees and a forwarder to transport the cut down trees from the forest. The identification and matching of the cut down trees may be performed manually by the skilled operator in the forwarder based on e.g. experience of the operator, coordinates of the felled trees and color markings on the felled trees.

This approach thus often requires a skilled operator in both the harvester and forwarder and may be error-prone due to e.g. the human factor. External factors may also result in identification and matching errors, such as snow covering the harvested tree logs, making it difficult for the operator to perform the matching. Therefore, there is still a need for a further improved method for identifying and matching logs with a higher accuracy.

### Summary

It would be advantageous to achieve a method that at least is alleviating some of the above-mentioned drawbacks. To better address one or more of these concerns a method to match a log using a forestry vehicle according to claim 1 is presented, as well as a forestry vehicle system for matching a log using a forestry vehicle according to claim 10. Preferred embodiments of the method and system are defined in the dependent claims.

Hence, according to a first aspect of the present invention, there is provided a method to match a log using a forestry vehicle comprising a body, a crane mounted on the body at a first end of the crane, and a control unit. The crane comprises a first boom. The method comprises:
- receiving a log data set indicating a position of at least one log,
- selecting a log of the at least one log,
- generating vehicle positional data indicating the position of the forestry vehicle,
- measuring a slew angle, α₁, of the crane relative the body in a third plane extending in the longitudinal direction and the width direction of the forestry vehicle,
- measuring a first boom angle, α₂, of the first boom relative the body, and
- identifying the selected log by the control unit based on the log data set, the vehicle positional data, the slew angle, and the first boom angle.

It will be appreciated that the method to match a log using a forestry vehicle identifies a selected log by the use of a control unit. The identification of the selected log is based on a log data set, vehicle positional data, a slew angle, α₁, and a first boom angle, α₂. It should be appreciated that by measuring/determining angles between the vehicle body and the booms/arms of the crane, the method may more precisely determine the orientation/a position of the crane. Holding the knowledge of the dimensions, e.g. length, of the crane, a position of a part of the crane and/or an orientation of the crane may be determined. It is to be understood that the crane may comprise one, two or more booms/arms. The method of matching a log according to the first aspect of the present invention is favorable since the identification of the selected log is performed by the control unit to e.g. be provided to an operator of the forestry vehicle. This simplifies the procedure for the operator of identifying the log, especially during circumstances where the harvested logs are visually difficult to identify. Additionally, the method according to the first aspect of the present invention entail for a more efficient approach, at least in regard to time, of identifying the harvested logs.

Furthermore, as mentioned herein, identifying the selected log is based on the log data set, the vehicle positional data, and orientation/angles of the crane, such as the slew angle, and the first boom angle. Basing the identification of the selected log on these parameters may result in identifying and matching a harvested log with a higher accuracy.

In one embodiment of the method, identifying the selected log may comprise
- determining crane end positional data by the control unit, indicating a position of a second end of the crane, opposite to the first end of the crane, based on the vehicle positional data, the slew angle, and the first boom angle,
- comparing the crane end positional data with the position of the selected log from the log data set, and
- determining a first matching metric, indicating a similarity between the crane end positional data and the position of the selected log, based on the comparison between the crane end positional data and the position of the selected log.

The present embodiment is advantageous in that identifying the selected log is performed by comparing crane end positional data, indicating a position of a second end of the crane, with the position of the selected log. This comparison, expressed by a first matching metric, enables obtaining an identification and matching of the selected log with a higher accuracy. For example, this allows a comparison between the position of the head of the crane, here the second end of the crane, and the position of the selected log. Thereby enabling picking up/loading of a log in a more precise manner, essentially matching the log and the second end of the crane. Consequently, the chance that you pick up the log you want to pick up is significantly increased. In other words, you have a more correct knowledge of what logs you have picked up. The head of the crane may comprise a grappling unit.

In one embodiment of the method, the crane may comprise an engagement unit, wherein the method may comprise
- determining engagement unit positioning data by the control unit, indicating an optimal engagement position for the engagement unit to engage the identified log, based on the log data set of the identified log, wherein the log data set may comprise at least one of a weight, a volume, a dimension, a tree species, and an assortment of the at least one log.

The present embodiment is advantageous in that engagement unit positioning data, indicating an optimal engagement position for an engagement unit to engage a selected log, is determined. The engagement unit positioning data is based on the log data set of the identified log. This simplifies the procedure for an operator of the forestry vehicle of matching and managing harvested logs, e.g. loading a harvested and identified log onto the forestry vehicle. This is especially favorable during circumstances where a harvested log is visually difficult to identify. This may also simplifies/improves an automated process for matching/managing harvested logs. Additionally, providing an optimal engagement position for the engagement unit to engage the identified log may entail a safer and more efficient manner, at least in regard to time, of matching and managing the harvested and identified log, in regard to the operator, the forestry vehicle, and/or any one of their surroundings. Furthermore, the log data set comprises a weight, a volume, a dimension, a tree species, and/or an assortment of the log(s). Therefore, the embodiment may provide improved accuracy of the engagement unit positioning data, thus improving the matching and managing of a harvested and identified log.

In one embodiment of the method, the log data set may comprise log weight data and log volume data of the at least one log, and wherein the method may comprise
- calculating a mass center, m₀, of the identified log based on the log weight data and the log volume data of the identified log, wherein determining the engagement unit positioning data may be based on the calculated mass center, m₀.

The present embodiment is advantageous in that the engagement unit positioning data is based on a calculated mass center of the identified log. This enables an improved indication of the optimal engagement position for the engagement unit to engage the identified log. For example, the weight distribution and/or the balance of the engaged log relative the engagement unit may be more evenly distributed. This may entail a safer and/or a more efficient manner, at least in regard to time, of matching and managing the harvested and identified log, for example when loading the log onto the forestry vehicle, such as a forwarder.

In one embodiment of the method, the crane may comprise a second boom mounted on the first boom, wherein the method may comprise
- measuring a second boom angle, α₃, of the second boom relative the first boom,
wherein identifying the selected log may be based on the second boom angle.

The present embodiment is advantageous in that the crane comprises a second boom, wherein a second boom angle, α₃, is measured. This allows an improved matching of the selected log when the crane used comprises two or more booms. Furthermore, the identification of the selected log is based on the second boom angle. This entails identifying the selected log is performed with a higher accuracy.

In one embodiment of the method, the body may comprise a front frame and a rear frame, and wherein the method may comprise at least one of
- measuring a steering angle, α₄, of the front frame relative the rear frame in a first plane extending in the longitudinal direction and the width direction of the forestry vehicle, and
- measuring a swivel angle, α₅, of the front frame relative the rear frame in a second plane extending in the longitudinal direction and the height direction of the forestry vehicle,
wherein identifying the selected log may be based on at least one of the steering angle and the swivel angle.

The present embodiment is advantageous in that the body may comprise a front frame and a rear frame, wherein a steering angle, α₄, and/or a swivel angle, α₅, of the front frame relative the rear frame may be measured. This provides additional measurement(s) for identifying the selected log. The additional measurement(s) entails that identifying the selected log may be performed with a higher accuracy. According to an example, identifying the selected log is determined based on both the steering angle and the swivel angle. By using the combination of these parameters, the positioning of the forestry vehicle may be better accounted/compensated for when matching and identifying the selected log. Hence, the example provides an even more accurate approach of identifying the selected log.

In one embodiment of the method, the method may further comprise
- generating pressure data of the identified log by measuring a pressure in a pressure cylinder in the crane,
- comparing, by the control unit, the generated pressure data of the identified log with predetermined pressure data based on the log data set of the identified log, and
- determining, by the control unit, a second matching metric indicating a similarity between the generated pressure data and the predetermined pressure data of the identified log, based on the comparison between the generated pressure data and the predetermined pressure data.

The present embodiment is advantageous in that a second matching metric is determined, indicating a similarity between the generated pressure data and the predetermined pressure data of the identified log. The predetermined pressure data may be related to a weight of the identified log. The present embodiment allows at least a partial confirmation of what log was identified and picked up. This embodiment provides a way to confirm what log was picked up. In other words, a post-picking up matching may be performed according to this embodiment. The log data set may comprise the predetermined pressure data. The generated pressure data may be compared with the log data set. For example, the generated pressure data may be compared with weight information of the log from the log data set. This enables identification of the selected log to be performed with a higher accuracy.

In one embodiment of the method, the vehicle positional data indicating the position of the forestry vehicle is generated by a high-precision-GNSS unit configured to generate vehicle positional data.

The present embodiment is advantageous in that the vehicle positional data is generated by a high-precision-GNSS unit. This results in that the vehicle positional data, indicating the position of the forestry vehicle, may be generated more precisely. It follows that the identification of the selected log may be determined more accurately. It should be noted that the resolution of which the position of the vehicle, and the crane, can be determined is of high importance for providing improved and proper matching/identification of the logs.

In one embodiment of the method, the forestry vehicle may comprise an imaging device, and wherein the method may comprise
- generating, by the imaging device, image data of the identified log,
- comparing, by the control unit, log data set of the identified log with the image data of the identified log, and
- determining, by the control unit, a third matching metric indicating a similarity between the log data set and the image data of the identified log, based on the comparison between the log data set and the image data of the identified log.

The present embodiment is advantageous in that a third matching metric is determined, indicating a similarity between the generated image data and the log data set of the identified log. This embodiment provides a further way to confirm what log was picked up. In other words, a post-picking up matching may be performed according to this embodiment. This embodiment enables identification of the selected log to be performed with a higher accuracy.

According to a second aspect of the present invention, there is provided a forestry vehicle system for matching a log using a forestry vehicle, wherein the forestry vehicle comprises a body and a crane mounted on the body at a first end of the crane. The crane comprises a first boom. The forestry vehicle system comprises
- a positioning unit arranged on the forestry vehicle configured to generate vehicle positional data indicating the position of the forestry vehicle,
- a first sensor configured to measure a slew angle, α₁, of the crane relative the body in a third plane extending in the longitudinal direction and the width direction of the forestry vehicle,
- a second sensor configured to measure a first boom angle, α₂, of the first boom relative the body, and
- a control unit configured to identify a selected log of at least one log based on a log data set indicating a position of the at least one log, the vehicle positional data, the slew angle, and the first boom angle.

It will be appreciated that the positioning unit generates vehicle positional data indicating the position of the forestry vehicle. Additionally, it should be noted that the log data set indicates a position of the at least one log. Based on these parameters, the control unit may identify a selected log of the at least one log, in a precise manner. This is favorable as it simplifies the procedure for an operator of identifying and matching the log. Furthermore, the first and second sensor, configured to measure a slew angle, α₁, and a first boom angle, α₂, respectively, further increases the accuracy of identifying the selected log. The second aspect according to the present embodiment is particularly advantageous in that the control unit is configured to identify the selected log. This enables a simpler, safer and/or more efficient approach, at least in regard to time, of identifying the selected log in regard to the forestry vehicle system, the forestry vehicle, an operator operating the forestry vehicle and/or any one of their surroundings.

Thus, the first and second aspect of the present invention are based on the common concept or idea of providing a method or a forestry vehicle system for matching a log using a (forestry) vehicle, in an efficient, at least in regard to time, and precise manner. Hence, the first and second aspect of the present invention share a common general inventive concept of providing a method or a forestry vehicle system wherein received and measured data is used when identifying a selected log, making the matching of the log more efficient, at least in regard to time, and more accurate.

In one embodiment of the forestry vehicle system, the control unit may be configured to
- determine a crane end positional data, indicating a position of a second end of the crane, opposite to the first end of the crane, based on the vehicle positional data, the slew angle, and the first boom angle,
- compare the crane end positional data with the position of the selected log from the log data set, and
- determine a first matching metric indicating a similarity between the crane end positional data and the position of the selected log based on the comparison between the crane end positional data and the position of the selected log.

The present embodiment is advantageous in that the control unit is configured to compare crane end positional data, indicating a position of a second end of the crane, with the position of the selected log. Determining crane end positional data of the position of the second end of the crane enables matching the position of the selected log with the position of the second end of the crane of the forestry vehicle system with an increased accuracy. Consequently, the control unit may therefore identify the selected log with an increased accuracy.

In one embodiment of the forestry vehicle system, the crane may comprise an engagement unit, wherein the control unit may be configured to determine engagement unit positioning data indicating an optimal engagement position for the engagement unit to engage the identified log based on the log data set of the identified log, wherein the log data set may comprise at least one of a weight, a volume, a dimension, a tree species, and an assortment of the at least one log.

The present embodiment is advantageous in that the control unit is configured to determine engagement unit positioning data, indicating an optimal engagement position for the engagement unit to engage the identified log. The engagement unit positioning data is based on the log data set of the identified log. This simplifies the procedure for an operator of the forestry vehicle of matching and managing harvested logs, e.g. loading a harvested and identified log onto the forestry vehicle. This is especially favorable during circumstances where a harvested log is visually difficult to identify. Additionally, due to the fact that the control unit is configured to determine the engagement unit positioning data indicating an optimal engagement position for the engagement unit to engage the identified log entail a safer and more efficient approach, at least in regard to time, of matching and managing the harvested log. This may be favorable by the forestry vehicle system, the forestry vehicle, an operator operating the forestry vehicle and/or any one of their surroundings. Furthermore, the log data set comprises a weight, a volume, a dimension, a tree species, and/or an assortment of the log(s). Therefore, the embodiment may provide improved accuracy of the engagement unit positioning data, thus improving the matching and managing of a harvested log.

In one embodiment of the forestry vehicle system, the log data set may comprise log weight data and log volume data of the at least one log,
wherein the control unit may be configured to calculate a mass center, m₀, of the identified log based on the log weight data and the log volume data of the identified log, and
wherein the control unit may be configured to determine the engagement unit positioning data based on the calculated mass center, m₀.

The present embodiment is advantageous in that the control unit is configured to calculate the mass center of the identified log. The present embodiment is further advantageous in that the control unit may determine the engagement unit positioning data based on the mass center of the identified log. This may improve the indication of the optimal engagement position by the control unit for the engagement unit to engage the identified log. For example, the weight distribution and/or balance of the engaged log relative the engagement unit may be more evenly distributed. This may entail a safer and more efficient, at least in regard to time, forestry vehicle system for matching and managing the harvested log.

In one embodiment of the forestry vehicle system, the forestry vehicle may further comprise a second boom mounted on the first boom, and wherein the forestry vehicle system may comprise
a third sensor configured to measure a second boom angle, α₃, of the second boom relative the first boom,
wherein the control unit may be configured to identify the selected log based on the second boom angle.

The present embodiment is advantageous in that the forestry vehicle system comprises a third sensor configured to measure a second boom angle, α₃, thus providing the control unit with additional parameters to identify the selected log. This enables the control unit to identify the selected log with a higher accuracy. Consequently, the forestry vehicle system may enable matching of a log in a more efficient way, at least in regard to time.

In one embodiment of the forestry vehicle system, the body may comprise a front frame and a rear frame, and wherein the forestry vehicle system may comprise at least one of
- a fourth sensor configured to measure a steering angle, α₄, of the front frame relative the rear frame in a first plane extending in the longitudinal direction and the width direction of the forestry vehicle, and
- a fifth sensor configured to measure a swivel angle, α₅, of the front frame relative the rear frame in a second plane extending in the longitudinal direction and the height direction of the forestry vehicle,
wherein the control unit may be configured to identify the selected log based on at least one of the steering angle and the swivel angle.

The present embodiment is advantageous in that the forestry vehicle system may comprise a fourth sensor and/or a fifth sensor. The fourth sensor is configured to measure a steering angle, α₄, of the front frame relative the rear frame, and the fifth sensor is configured to measure a swivel angle, α₅, of the front frame relative the rear frame. This entails the control unit to identify the selected log more precisely. Furthermore, the foundation of the ground whereupon a forestry vehicle operate is sometimes uneven. The present embodiment is therefore particularly advantageous in that external factors of the forestry vehicle system are at least partially considered when identifying the selected log as the fourth sensor is configured to measure the steering angle and the fifth sensor is configured to measure the swivel angle, between the front frame and the rear frame. This provides a more adaptable and versatile forestry vehicle system regarding e.g. its surroundings for identifying the selected log.

### Brief description of the drawings

The invention will be better understood through the following illustrative and non-limiting detailed description of preferred embodiments, with reference to the appended drawings, in which:
Figure 1 illustrates schematically the different steps of the method according to the invention.
Figure 2 illustrates schematically different steps of the method according to exemplifying embodiments of the present invention.
Figure 3a illustrates a schematic top view of a forestry vehicle system according to the present invention.
Figure 3b illustrates a schematic side view of selected parts of the forestry vehicle system according to the present invention.
Figure 4a illustrates a schematic top view of the forestry vehicle system according to an exemplifying embodiment of the present invention.
Figure 4b illustrates a schematic side view of selected parts of the forestry vehicle system according an exemplifying embodiment of the present invention.

All figures are schematic, not necessarily to scale, and generally only show parts which are necessary in order to elucidate the invention, wherein other parts may be omitted or merely suggested.

### Detailed description of embodiments

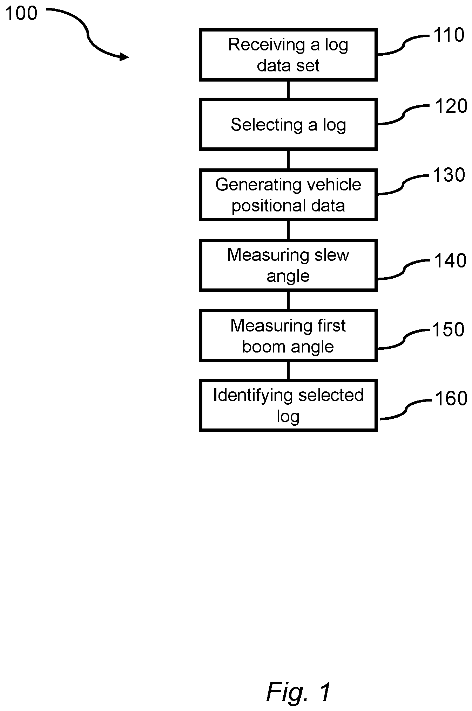

In figure 1, a schematic illustration of a method 100 to match a log using a forestry vehicle according to the invention is illustrated. The forestry vehicle comprises a body, a crane mounted on the body at a first end of the crane, and a control unit. Furthermore, the crane comprises a first boom.

The method 100 comprises receiving 110 a log data set indicating a position of the at least one log. According to an example, the log data set may be received from a vehicle such that a harvester which has harvested the at least one log. The method 100 further comprises selecting 120 a log of the at least one log. It should be noted that the log data set indicates (at least) a position of the selected log, with the possibility of indicating a position of possible additional logs. The log data set may further comprise at least one of a weight, a volume, a dimension, a tree species, and an assortment of the at least one log. Selecting 120 a log may be performed manually by an operator, automatically e.g. by the control unit according to a selecting scheme, or a combination of them both. According to an example, the log(s) is (are) visualized on a display based on the log data set. According to another example, the log(s) is (are) visualized on a display using an augmented reality, AR, system. Any of these examples of visualization of the log(s) may be updated whilst operating the forestry vehicle. Updates may be done to the visualization of the log(s) when e.g. a log has been identified and loaded onto the forestry vehicle. An operator would then have an accurate overview of harvested logs available for identifying and loading.

The method 100 further comprises generating 130 vehicle positional data indicating the position of the forestry vehicle. The vehicle positional data may be generated by e.g. a satellite navigation system such as a global navigation satellite system, GNSS, unit and/or a mathematical algorithm such as a simultaneous localization and mapping, SLAM, algorithm. Generating 130 vehicle positional data may occur (only) once to be able to identify the selected log based on the position of the selected log, the vehicle positional data, slew angle, α₁, and first boom angle, α₂. Generating 130 vehicle positional data may also be performed continuously. This would enable comparing the position of the forestry vehicle relative the selected log, to facilitate for an operator to locate the selected log in situations where e.g. the forestry vehicle is far away from the selected log. According to an example, the received log data set indicating a position of the at least one log and the generated vehicle positional data indicating the position of the forestry vehicle are used to position the forestry vehicle relative the selected log. Furthermore, the log data set, the vehicle positional data, the first boom angle, and/or the slew angle may be utilized to position the crane relative the selected log. The positioning of the forestry vehicle and/or the crane relative the selected log may be at least partially automatically performed.

The method 100 comprises measuring 140 a slew angle, α₁, of the crane relative the body and measuring 150 a first boom angle, α₂, of the first boom relative the body. The slew angle is measured in a third plane extending in the longitudinal direction and the width direction of the forestry vehicle. In other words, the slew angle represents a rotation of the crane relative the body of the forestry vehicle, in said third plane. The first boom angle may describe the angle of inclination of the first boom relative the body.

Furthermore, the method 100 comprises identifying 160 the selected log by the control unit. The identifying 160 of the selected log is based on the log data set, the vehicle positional data, the slew angle and the first boom angle. Hence, the identifying 160 of the selected log is based on the position of the log(s), the position of the forestry vehicle, the slew angle of the crane, and the first boom angle. According to an example, an extension and/or a retraction of the crane is further measured. It should be noted that the identifying 160 of the selected log may further be based on at least one of these exemplified measurements.

The control unit according to figure 1 may be coupled or connected to the forestry vehicle by wire or wirelessly. Furthermore, the control unit is an internal control unit according to figure 1, but it should be noted that the control unit may be an external control unit, or a combination of them both.

The method 100 according to the first aspect of the present invention may be at least partially automatic. Additionally, the movement of the forestry vehicle and/or the crane may be at least partially automatic. Depending on the degree of automatization of the method 100, forestry vehicle, and/or the crane, the need for visual inspection by an operator may be reduced or eliminated. Furthermore, at least one of the collected data such as the log data set, the vehicle positional data, the slew angle, and the first boom angle may be configured to be further transferred to an internal or external receiver. This transfer may be performed at least partially automatically.

It should be noted that the steps of the method 100 are described in a non-limiting order. Hence, variations may appertain to the order in which they are performed. For example, measuring 150 the first boom angle may be performed before measuring 140 the slew angle. According to another example, selecting 120 a log of the at least one log may be performed after generating 130 vehicle positional data.

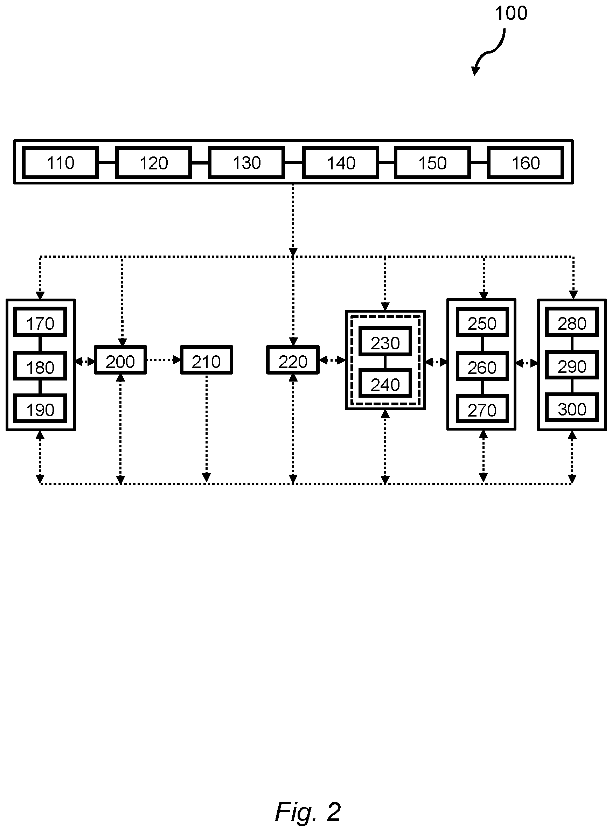

In figure 2, a schematic illustration of the method 100 according to exemplifying embodiments of the first aspect of the present invention are illustrated. It should be noted that the method 100 to match a log using a forestry vehicle shown in figure 2 has several features in common with the method 100 described in figure 1, and it is hereby referred to figure 1 and the associated text for an increased understanding of some of the features and/or functions of the method 100. It should also be noted that the schematic illustration in figure 2 may not disclose every available combination, permutation etc. of the steps of the method 100 of the exemplifying embodiments for the sake of simplicity. Therefore, figure 2 should be interpreted as non-limiting in possible alterations and/or combinations within and between the steps of the method 100 of the exemplifying embodiments.

The method 100 is related to matching a log using a forestry vehicle comprising a body, a crane, and a control unit. A selected log is identified by the control unit based on a log data set, vehicle positional data, a slew angle, α₁, and a first boom angle, α₂. Identifying 160 the selected log comprises the step of determining 170 crane end positional data by the control unit, indicating a position of a second end of the crane, opposite to the first end of the crane. The crane end positional data is based on the vehicle positional data, the slew angle, and the first boom angle. Identifying 160 the selected log further comprises comparing 180 the crane end positional data with the position of the selected log from the log data set, and determining 190 a first matching metric, indicating a similarity between the crane end positional data and the position of the selected log, based on the comparison between the crane end positional data and the position of the selected log. Hence, the position of the second end of the crane is compared to the position of the selected log. Identifying 160 the selected log may be approved or rejected based on the determined first matching metric. The outcome of the log assessment/identification may involve a threshold of an acceptable value of the first matching metric. For example, the threshold may comprise an acceptable value of the first matching metric in the range of 80-100%, wherein the range represents a range of matching between minimum matching, 0%, and maximum matching 100%.

The forestry vehicle further comprises an engagement unit, wherein the method 100 further comprises determining 200 engagement unit positioning data by the control unit, indicating an optimal engagement position for the engagement unit to engage the identified log, based on the log data set of the identified log. It should be noted that the received log data set indicating a position of the at least one log may comprise a multiple of log data sets related to a plurality of logs. It should further be noted that the received log data set thus (at least) comprises the log data set of the identified log. The log data set comprises at least one of a weight, a volume, a dimension, a tree species, and an assortment of the at least one log. The dimension of the at least one log may for example comprise a length and/or a diameter of the at least one log. This enables selecting 120 logs within a specific assortment, species, and/or dimension. Such selection may comprise selecting 120 logs with a larger volume to be identified and managed, before logs with a smaller volume. This may for example result in a well-balanced load on the forestry vehicle after loading the identified logs.

According to an example, a closing angle of the engagement unit and/or a rotational angle of the engagement unit relative the first boom is (are) measured. It should be noted that the engagement unit positioning data may further be based on at least one of the aforementioned exemplified measurements.

Optimal engagement position may involve determining 200 an engagement position of the engagement unit that result in a more energy and/or time efficient manner of matching and managing a log and/or increased safety for an operator and their surrounding environment. For example, determining 200 the optimal engagement position for the engagement unit may result in a reduced risk of damaging and/or dropping the log. The optimal engagement position may also entail a reduced risk in damaging the forestry vehicle and its components, elements, or the like. This may be achieved as the optimal engagement position may result in a more even distribution of the applied pressure from the logs on the forestry vehicle.

The log data set comprises log weight data and log volume data of the at least one log. The method 100 further comprises calculating 210 a mass center, m₀, of the identified log based on the log weight data and the log volume data. The engagement unit positioning data is further based on the calculated mass center, m₀. The weight and/or volume data of the identified log may be used to determine a total weight and/or volume of a plurality of logs during e.g. loading logs onto the forestry vehicle. This may prevent overloading the forestry vehicle. Additionally, the log data set may further comprise a total harvested volume data. The total loaded volume data may be compared to the total harvested volume data. This may simplify the managing and identifying 160 of the logs in e.g. ensuring/verifying that every harvested log that should be loaded, is loaded.

The optimal engagement position for the engagement unit to engage the identified log may further be improved as the engagement unit positioning data is based on the calculated mass center. This entails the engagement unit to engage the selected log at an engagement position that results in a more even weight distribution of the selected log in relation to the engagement unit and/or the forestry vehicle.

The crane comprises a second boom mounted on the first boom. The method 100 comprises measuring 220 a second boom angle, α₃, of the second boom relative the first boom, wherein identifying 160 the selected log is based on the second boom angle. According to an example, the second boom angle may comprise a primary and/or a secondary second boom angle. The primary second boom angle describes an angle of inclination of the second boom relative the first boom. The secondary second boom angle represents a slew angle in a fourth plane perpendicular to the longitudinal direction of the first boom. Hence, the secondary second boom angle describes a rotation of the second boom relative the first boom in said fourth plane. The measuring 220 of the second boom angle may therefore, according to the example, comprise measuring a primary second boom angle and/or measuring a secondary second boom angle. According to the example, identifying 160 the selected log may be based on both the primary and secondary second boom angle, or only one. According to another example, the second boom may comprise a telescoping/telescope arrangement/unit configured to extend and retract the length of the second boom. An extension and/or a retraction of the second boom may be further measured. Identifying 160 the selected log by the control unit may be further based on the exemplified measurement(s) of the extension and/or the retraction of the second boom.

The body of the forestry vehicle comprises a front frame and a rear frame. The front frame and the rear frame may together establish an articulated frame. The articulated frame may allow additional degrees of freedom of the front frame and the rear frame in relation to each other compared to e.g. a universal joint mounted in a car. The method 100 further comprises at least one of measuring 230 a steering angle, α₄, of the front frame relative the rear frame and measuring 240 a swivel angle, α₅, of the front frame relative the rear frame. The steering angle is measured in a first plane extending in the longitudinal direction and the width direction of the forestry vehicle. The swivel angle is measured in a second plane extending in the longitudinal direction and the height direction of the forestry vehicle. Identifying 160 the selected log is based on at least one of the steering angle and the swivel angle. According to an example, at least one of the steering angle and the swivel angle is measured by an inclinometer.

The method 100 further comprises generating 250 pressure data of the identified log by measuring a pressure in a pressure cylinder in the crane, and comparing 260, by the control unit, the generated pressure data of the identified log with predetermined pressure data based on the log data set of the identified log. Additionally, the method 100 comprises determining 270, based on the comparison between the generated pressure data and the predetermined pressure data, a second matching metric indicating a similarity between the generated pressure data and the predetermined pressure data of the identified log

All of the, or only some, of generating 250 pressure data, comparing 260 pressure data with predetermined pressure data, and determining 270 a second matching metric may be performed at least partially automatically. According to an example, the second matching metric is used to approve or reject a further identification of the already identified log. This assessment of further identifying the already identified log may be performed post-picking up the log by e.g. the engagement unit. Hence, the second matching metric may be used to further verify the (primary) already identified selected log. Thus, determining 270 the second matching metric may be interpreted as a secondary identification of the already identified log. The outcome of the further/secondary identification of the primary identified log may involve a threshold of an acceptable value of the second matching metric. For example, the threshold may comprise an acceptable value of the second matching metric in the range of 80-100%, wherein the range represents a range of matching between minimum matching, 0%, and maximum matching 100%. Hence, the steps generating 250 pressure data, comparing 260 the generated pressure data with the predetermined pressure data, and determining 270 a second matching metric indicating a similarity between the generated pressure data and the predetermined pressure data enables further identifying a log with a higher accuracy. This may be especially useful if the received log data set is in any way insufficient, deficient, and/or lacking, regarding e.g. the position of the at least one log

The generated vehicle positional data indicating the position of the forestry vehicle is generated by a high-precision-GNSS unit configured to generate vehicle positional data. The precision of the GNSS unit may be less than 100 cm, more preferably less than 50 cm, and most preferably less than 10 cm. According to an example, the GNSS unit comprises real-time kinematic positioning (RTK). The precision of the GNSS unit to generate vehicle positional data may be improved by the use of the RTK technique.

The forestry vehicle further comprises an imaging device, wherein the method 100 further comprises generating 280, by the imaging device, image data of the identified log, and comparing 290, by the control unit, log data set of the identified log with the image data of the identified log. The method 100 further comprises determining 300, based on the comparison between the log data set and the image data of the identified log, a third matching metric indicating a similarity between the log data set and the image data of the identified log.

All, or only some, of the generating 280 image data, comparing 290 log data set with image data of the identified log, and determining 300 a third matching metric, may be performed at least partially automatically. The third matching metric may used to approve or reject a further identification of the already identified log. This assessment of further identifying the already identified log may be performed post-picking up the log by e.g. the engagement unit. Hence, the third matching metric may be used to further verify the (primary) already identified selected log. Thus, determining 300 the third matching metric may be interpreted as a secondary identification of the already identified log. The outcome of the further/secondary identification of the primary identified log may involve a threshold of an acceptable value of the third matching metric. For example, the threshold may comprise an acceptable value of the third matching metric in the range of 80-100%, wherein the range represents a range of matching between minimum matching, 0%, and maximum matching 100%. Hence, the steps generating 280 image data, comparing 290 the log data set with the image data, and determining 300 a third matching metric indicating a similarity between the log data set and the image data enables further identifying a log with a higher accuracy. This may be especially useful if the received log data set is in any way insufficient, deficient, and/or lacking, e.g. regarding the position of the at least one log. The imaging device may be any imaging device configured to provide pictures and/or video segments of the selected log.

As stated herein, identifying 160 the selected log is based on the log data set, the vehicle positional data, the slew angle, and the first boom angle. Furthermore, identifying 160 the selected log may be based on the first matching metric indicating a similarity between the crane end positional data and the position of the selected log, as well as on at least one of the second boom angle, the steering angle, and the swivel angle. Additionally, the selected log may be further identified by the control unit by a third matching metric indicating a similarity between the log data set and the image data of the identified log. It should be noted that the determining 200 of the engagement unit positioning data may as be further based on at least one of these aforementioned properties. This may result in a more precise optimal engagement position for the engagement unit to engage the identified log.

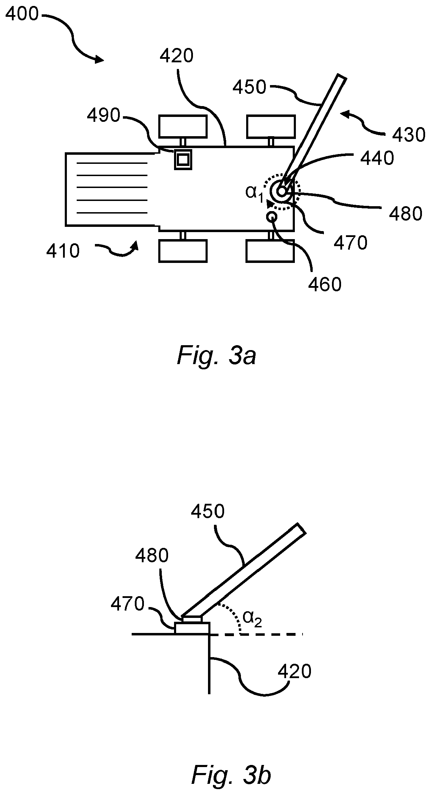

In figure 3a, a schematic top view of a forestry vehicle system 400 according to a second aspect of the present invention is illustrated. The forestry vehicle system 400 is intended for work within forest areas, especially for identifying a log using a forestry vehicle 410. It should be noted that the forestry vehicle system 400 and the forestry vehicle 410 shown in figure 3a have several features in common with the method 100 and the forestry vehicle described in figures 1 and 2, and it is hereby referred to figures 1 and 2, and the associated text for an increased understanding of some of the features and/or functions of the forestry vehicle system 400 and the forestry vehicle 410.

The forestry vehicle system 400 comprises a forestry vehicle 410, wherein the forestry vehicle 410 comprises a body 420 and a crane 430 mounted on the body 420 at a first end 440 of the crane 430. The crane 430 comprises a first boom 450. According to an example, the body 420 comprises a loading compartment for logs. According to another example, the forestry vehicle 410 is a forwarder. According to another example, the first boom 450 may comprise a telescoping/telescope arrangement/unit configured to extend and retract the length of the first boom 450. The forestry vehicle system 40 may further comprise a sensor configured to measure the extension and/or the retraction of the first boom 450. The control unit 490 may be further configured to identify the selected log based on these exemplifying measurements, on their own or combined.

The forestry vehicle system 400 comprises a positioning unit 460 arranged on the forestry vehicle 410 configured to generate vehicle positional data indicating the position of the forestry vehicle 410. The positioning unit 460 may comprise e.g. a satellite navigation system such as a global navigation satellite system, GNSS, unit and/or a mathematical algorithm such as a simultaneous localization and mapping, SLAM, algorithm. The forestry vehicle system 400 further comprises at least one of a first sensor 470 and a second sensor 480. The first sensor 470 is configured to measure a slew angle, α₁, of the crane 430 relative the body 420 in a third plane extending in the longitudinal direction and the width direction of the forestry vehicle 410. In other words, the slew angle represents a rotation of the crane 430 relative the body 420 of the forestry vehicle 410, in said third plane. The second sensor 480 is configured to measure a first boom angle, α₂, of the first boom 450 relative the body 420. Hence, the first boom angle may represent an angle of inclination of the first boom 450 relative the body 420.

Furthermore, the forestry vehicle system 400 comprises a control unit 490 configured to identify a selected log of at least one log. The control unit 490 according to figure 3a may be coupled or connected to the forestry vehicle system 400 by wire or wirelessly. Furthermore, the control unit 490 is an internal control unit according to figure 3a, but it should be noted that the control unit 490 may be an external control unit, or a combination of them both. The identification of the selected log by the control unit 490 may be performed at least partially automatically, or by some interaction from e.g. an operator of the forestry vehicle system 400.

The control unit 490 is configured to identify the selected log based on a log data set, the generated vehicle positional data, and the measured slew angle and/or the first boom angle. The log data set indicates a position of the at least one log. According to an example, the log data set may be received from a harvester.

In figure 3b, a schematic side view of selected parts of the forestry vehicle system 400 according to the present invention in figure 3a is illustrated. Figure 3b illustrates the first boom angle, α₂, of the first boom 450 relative the body 420. According to the figure, the first boom angle describes the angle of inclination of the first boom 450 relative the body 420. The first sensor 470 is configured to measure the slew angle, α₁, of the crane 430 relative the body 420, whereas the second sensor 480 is configured to measure the first boom angle of the first boom 450 relative the body 420.

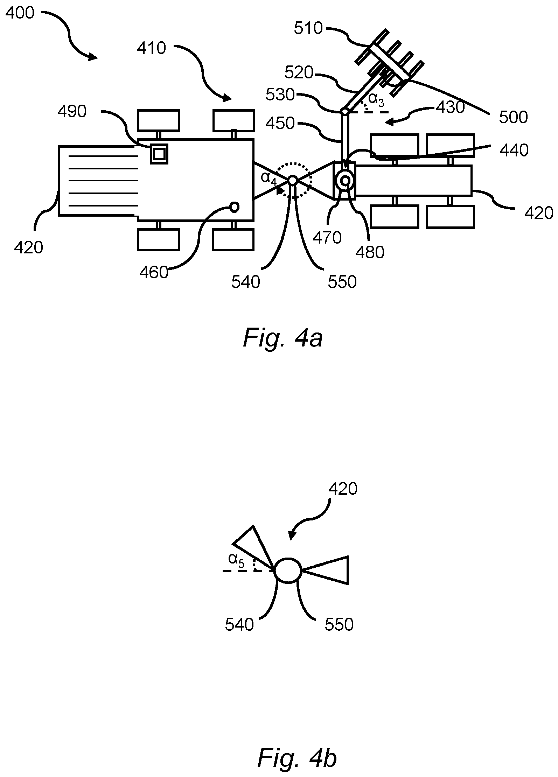

In figure 4a, a schematic top view of the forestry vehicle system 400 according to an embodiment of the invention is illustrated. It should be noted that the forestry vehicle system 400 and the forestry vehicle 410 shown in figure 4a has several features in common with the forestry vehicle system 400 and forestry vehicle 410 shown in figures 3a and 3b, and it is hereby referred to figure 3a and 3b and the associated text for an increased understanding of some of the features and/or functions of the forestry vehicle system 400 and the forestry vehicle 410.

The forestry vehicle system 400 comprises a forestry vehicle 410, wherein the forestry vehicle 410 comprises a body 420 and a crane 430 mounted on the body 420 at a first end 440 of the crane 430. The crane 430 comprises a first boom 450. The forestry vehicle system 400 comprises a positioning unit 460 configured to generate vehicle positional data indicating the position of the forestry vehicle 410, a first sensor 470 configured to measure a slew angle, α₁, of the crane 430 relative the body 420, a second sensor 480 configured to measure a first boom angle, α₂, of the first boom 450 relative the body 420, and a control unit 490 configured to identify a selected log of at least one log based on a log data set indicating a position of the at least one log, the vehicle positional data, the slew angle, and the first boom angle.

Furthermore, the control unit 490 is configured to determine a crane end positional data, indicating a position of a second end 500 of the crane 430, opposite to the first end 440 of the crane 430, based on the vehicle positional data, the slew angle, and the first boom angle, and compare the crane end positional data with the position of the selected log from the log data set. Furthermore, the control unit 490 is configured to determine a first matching metric indicating a similarity between the crane end positional data and the position of the selected log based on the comparison between the crane end positional data and the position of the selected log. Hence, the position of the second end 500 of the crane 430 is compared to the position of the selected log. The control unit 490 may be further configured to approve or reject the identification of the selected log based on the determined first matching metric. The possible approval or rejection by the control unit 490 may involve a threshold of an acceptable value of the first matching metric. For example, the threshold may comprise an acceptable value of the first matching metric in the range of 80-100%.

According to the embodiment illustrated in figure 4a, the forestry vehicle 410 further comprises an engagement unit 510. The engagement unit 510 is configured to engage with one or several logs such as loading the log(s) on the forestry vehicle 410. The engagement unit 510 may be any type of engagement unit configured to engage with a log. The engagement unit 510 may be configured to pick, hold, grapple, grab, clutch, clasp, or the like, (a) log(s). For example, the engagement unit 510 may be one of a root grapple, a rake grapple, a root rake grapple, or the like. Furthermore, the first boom 450 may be extendable and retractable. The forestry vehicle system 400 may further comprise a sensor configured to measure the extension and/or the retraction of the first boom 450. The control unit 490 may be further configured to determine engagement unit positioning data based on these exemplifying measurements, on their own or combined. The engagement unit positioning data, indicating an optimal engagement position, is based on the log data set of the identified log. The log data set comprises at least one of a weight, a volume, a dimension, a tree species, and an assortment of the at least one log.

By optimal engagement position, it may involve the control unit 490 being configured to determine an engagement position of the engagement unit 510 that result in a more energy and/or time efficient forestry vehicle system 400. The optimal engagement position may result in an increased safety for an operator and/or their surrounding environment. For example, determining 200 the optimal engagement position may result in a reduced risk of damaging and/or dropping the log. The optimal engagement position may also entail a reduced risk in damaging the forestry vehicle system 400 and/or the forestry vehicle 410 and its (their) components, elements, or the like. This may be achieved as the optimal engagement position may result in a more even distribution of the applied pressure from the logs on e.g. the forestry vehicle 410.

According to the embodiment illustrated in figure 4a, the log data set comprises log weight data and log volume data of the at least one log. Furthermore, the control unit 490 is configured to calculate a mass center, m₀, of the identified log based on the log weight data and the log volume data of the identified log. Additionally, the control unit 490 is configured to determine the engagement unit positioning data based on the calculated mass center, m₀

According to an example, the control unit 490 may be further configured to use the log data set comprising log weight data and log volume data of the identified log to determine a total weight and/or volume of a plurality of logs during e.g. loading logs onto the forestry vehicle 410. This may prevent overloading the forestry vehicle 410. Additionally, the log data set may further comprise a total harvested volume data. According to the example, the control unit 490 may be further configured to compare the total loaded volume data to the total harvested volume data. This may simplify for the forestry vehicle system 400 the managing and identifying 160 of the logs in e.g. ensuring/verifying that every harvested log that should be loaded, is loaded.

Considering that the control unit 490 is configured to determine the engagement unit positioning data based on the calculated mass center, the optimal engagement position for the engagement unit 510 to engage the identified log may further be improved. This may entail the engagement unit 510 to engage the identified log at an engagement position that results in a more even weight distribution of the identified log in relation to the engagement unit 510 and/or to the forestry vehicle 410.

In the illustrated embodiment of the forestry vehicle system 400, the forestry vehicle 410 further comprises a second boom 520 mounted on the first boom 450. The second boom 520 may be extendable and/or retractable. The forestry vehicle system 400 may further comprise a sensor configured to measure the extension and/or the retraction of the second boom 520. The control unit 490 may be further configured to identify the selected log based on these exemplifying measurements, on their own or combined.

The forestry vehicle system 400 comprises a third sensor 530 configured to measure a second boom angle, α₃, of the second boom 520 relative the first boom 450. The control unit 490 is configured to identify the selected log based on the second boom angle.

According to an example, the third sensor 530 may comprise a primary third sensor and/or a secondary third sensor. The primary third sensor is configured to measure a primary second boom angle of the second boom 520 relative the first boom 450. The primary second boom angle describes an angle of inclination of the second boom 520 relative the first boom 450. The secondary third sensor is configured to measure a secondary second boom angle of the second boom 520 relative the first boom 450 in a fifth plane perpendicular to the longitudinal direction of the first boom 450. Hence, the secondary second boom angle describes a rotation of the second boom 520 relative the first boom 450 in said fifth plane. According to the example, the control unit 490 is configured to identify the selected log based on at least one of the primary and secondary second boom angle.

According to figure 4a, the forestry vehicle 410 further comprises a front frame and a rear frame. The front frame and the rear frame may together establish an articulated frame. The articulated frame may allow additional degrees of freedom of the front frame and the rear frame in relation to each other compared to e.g. a universal joint mounted in a car.

The forestry vehicle system 400 further comprises at least one of a fourth sensor 540 and a fifth sensor 550. The fourth sensor 540 is configured to measure a steering angle, α₄, of the front frame relative the rear frame in a first plane extending in the longitudinal direction and the width direction of the forestry vehicle 410. The fifth sensor 550 is configured to measure a swivel angle, α₅, of the front frame relative the rear frame in a second plane extending in the longitudinal direction and the height direction of the forestry vehicle 410. The fourth sensor 540 and the fifth sensor 550 may be the same sensor. The control unit 490 is configured to identify the selected log based on at least one of the steering angle and the swivel angle.

As stated herein, the control unit 490 is configured to identify the selected log based on the log data set, the vehicle positional data, the slew angle, and the first boom angle. In some embodiments, the control unit 490 is configured to identify the selected log based on the first matching metric indicating a similarity between the crane end positional data and the position of the selected log, as well as on at least one of the second boom angle, the steering angle, and the swivel angle. It should be noted that the control unit 490 may be further configured to determine the engagement unit positioning data based on at least one of these aforementioned properties. This may result in the control unit 490 to determine a more precise optimal engagement position for the engagement unit 510 to engage the identified log.

In figure 4b, a schematic side view of selected parts of the forestry vehicle system 400 according to the present invention in figure 4a is illustrated. Figure 4b illustrates the swivel angle, α₅, of the front frame relative the rear frame in a second plane extending in the longitudinal direction and the height direction of the forestry vehicle 410. The forestry vehicle system 400 according to the exemplifying embodiment of figure 4b comprises both the fourth sensor 540 configured to measure the steering angle, α₄, of the front frame relative the rear frame, and the fifth sensor 550 configured to measure the swivel angle of the front frame relative the rear frame. It should be noted that it is achievable for the forestry vehicle system 400 to comprise only one of the fourth sensor 540 and fifth sensor 550.

While the invention has been illustrated and described in detail in the drawings and foregoing description, such illustration and description are to be considered illustrative or exemplary and not restrictive; the invention is not limited to the disclosed embodiments. The skilled person understands that many modifications, variations, and alterations are conceivable within the scope as defined in the appended claims.

Additionally, variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. Method (100) to match a log using a forestry vehicle comprising a body, a crane mounted on the body at a first end of the crane, and a control unit, wherein the crane comprises a first boom, the method comprising
receiving (110) a log data set indicating a position of at least one log,
selecting (120) a log of the at least one log,
generating (130) vehicle positional data indicating the position of the forestry vehicle,
measuring (140) a slew angle, α₁, of the crane relative the body in a third plane extending in the longitudinal direction and the width direction of the forestry vehicle,
measuring (150) a first boom angle, α₂, of the first boom relative the body, and
identifying (160) the selected log by the control unit based on the log data set, the vehicle positional data, the slew angle, and the first boom angle.

2. The method according to claim 1, wherein identifying the selected log comprises
determining (170) crane end positional data by the control unit, indicating a position of a second end of the crane, opposite to the first end of the crane, based on the vehicle positional data, the slew angle, and the first boom angle,
comparing (180) the crane end positional data with the position of the selected log from the log data set, and
determining (190) a first matching metric, indicating a similarity between the crane end positional data and the position of the selected log, based on the comparison between the crane end positional data and the position of the selected log.

3. The method according to claims 1 or 2, wherein the crane comprises an engagement unit, the method comprising
determining (200) engagement unit positioning data by the control unit, indicating an optimal engagement position for the engagement unit to engage the identified log, based on the log data of the identified log,
wherein the log data set comprises at least one of a weight, a volume, a dimension, a tree species, and an assortment of the at least one log.

4. The method according to claim 3, wherein the log data set comprises log weight data and log volume data of the at least one log, and wherein the method comprises
calculating (210) a mass center, m₀, of the identified log based on the log weight data and the log volume data of the identified log,
wherein determining the engagement unit positioning data is based on the calculated mass center, m₀

5. The method according to any one of the preceding claims, wherein the crane comprises a second boom mounted on the first boom, wherein the method comprises
measuring (220) a second boom angle, α₃, of the second boom relative the first boom,
wherein identifying the selected log is based on the second boom angle.

6. The method according to any one of the preceding claims, wherein the body comprises a front frame and a rear frame, and wherein the method comprises at least one of
measuring (230) a steering angle, α₄, of the front frame relative the rear frame in a first plane extending in the longitudinal direction and the width direction of the forestry vehicle, and
measuring (240) a swivel angle, α₅, of the front frame relative the rear frame in a second plane extending in the longitudinal direction and the height direction of the forestry vehicle,
wherein identifying the selected log is based on at least one of the steering angle and the swivel angle.

7. The method according to any one of the preceding claims, wherein the method comprises
generating (250) pressure data of the identified log by measuring a pressure in a pressure cylinder in the crane,
comparing (260), by the control unit, the generated pressure data of the identified log with predetermined pressure data based on the log data of the identified log, and
determining (270), by the control unit, a second matching metric indicating a similarity between the generated pressure data and the predetermined pressure data of the identified log, based on the comparison between the generated pressure data and the predetermined pressure data.

8. The method according to any one of the preceding claims, wherein the vehicle positional data indicating the position of the forestry vehicle is generated by a high-precision-GNSS unit configured to generate vehicle positional data.

9. The method according to any one of the preceding claims, wherein the forestry vehicle comprises an imaging device, and wherein the method comprises
generating (280), by the imaging device, image data of the identified log,
comparing (290), by the control unit, log data of the identified log with the image data of the identified log, and
determining (300), by the control unit, a third matching metric indicating a similarity between the log data and the image data of the identified log, based on the comparison between the log data and the image data of the identified log.

10. A forestry vehicle system (400) for matching a log using a forestry vehicle (410), wherein the forestry vehicle comprises a body (420) and a crane (430) mounted on the body at a first end (440) of the crane, wherein the crane comprises a first boom (450), wherein the forestry vehicle system comprises
a positioning unit (460) arranged on the forestry vehicle configured to generate vehicle positional data indicating the position of the forestry vehicle,
a first sensor (470) configured to measure a slew angle, α₁, of the crane relative the body in a third plane extending in the longitudinal direction and the width direction of the forestry vehicle,
a second sensor (480) configured to measure a first boom angle, α₂, of the first boom relative the body, and
a control unit (490) configured to identify a selected log of at least one log based on a log data set indicating a position of the at least one log, the vehicle positional data, the slew angle, and the first boom angle.

11. The forestry vehicle system according to claim 10, wherein the control unit is configured to
determine a crane end positional data, indicating a position of a second end (500) of the crane, opposite to the first end of the crane, based on the vehicle positional data, the slew angle, and the first boom angle,
compare the crane end positional data with the position of the selected log from the log data set, and
determine a first matching metric indicating a similarity between the crane end positional data and the position of the selected log based on the comparison between the crane end positional data and the position of the selected log.

12. The forestry vehicle system according to claims 10 or 11, wherein the crane comprises an engagement unit (510), wherein the control unit is configured to determine engagement unit positioning data indicating an optimal engagement position for the engagement unit to engage the identified log based on the log data of the identified log,
wherein the log data set comprises at least one of a weight, a volume, a dimension, a tree species, and an assortment of the at least one log.

13. The forestry vehicle system according to claim 12, wherein the log data set comprises log weight data and log volume data of the at least one log,
wherein the control unit is configured to calculate a mass center, m₀, of the identified log based on the log weight data and the log volume data of the identified log, and
wherein the control unit is configured to determine the engagement unit positioning data based on the calculated mass center, m_{0.}

14. The forestry vehicle system according to any one of claims 10 to 13, wherein the forestry vehicle comprises a second boom (520) mounted on the first boom, and wherein the forestry vehicle system comprises
a third sensor (530) configured to measure a second boom angle, α₃, of the second boom relative the first boom,
wherein the control unit is configured to identify the selected log based on the second boom angle.

15. The forestry vehicle system according to any one of claims 10 to 14, wherein the body comprises a front frame and a rear frame, and wherein the forestry vehicle system comprises at least one of
a fourth sensor (540) configured to measure a steering angle, α₄, of the front frame relative the rear frame in a first plane extending in the longitudinal direction and the width direction of the forestry vehicle, and
a fifth sensor (550) configured to measure a swivel angle, α₅, of the front frame relative the rear frame in a second plane extending in the longitudinal direction and the height direction of the forestry vehicle,
wherein the control unit is configured to identify the selected log based on at least one of the steering angle and the swivel angle.
